# EUROPEAN PATENT SPECIFICATION

(11) **EP 0 480 649 B1**
(45) Date of publication and mention of the grant of the patent: **08.02.1995**
(21) Application number: 91309149.2
(22) Date of filing: 07.10.1991
(51) Int. Cl.: F16F 1/38, B60G 13/00

(54) **Shock dampening mount**
Stossabsorbierendes Lager
Support amortisseur de chocs

(30) Priority: 11.10.1990 US 595888
(43) Date of publication of application: 15.04.1992
(73) Proprietor: GENCORP INC., Fairlawn, Ohio 44333-3300 (US)
(72) Inventor: Goewey, James R., Marion, Indiana 46952 (US); Hampton, Bradley G., Tipton, Indiana 46072 (US); Hein, Richard D., Wabash, Indiana 46992 (US); Jonas, Tony R., Walton, Indiana 46994 (US)
(74) Representative: Stoner, Gerard Patrick

(56) References cited:
- EP-A- 0 027 356
- EP-A- 0 063 016
- EP-A- 0 327 810
- DE-A- 1 525 131
- DE-B- 1 217 146
- FR-A- 2 135 551
- GB-A- 2 140 123

## Description

The invention relates to a shock dampening mount which employs resilient elastomeric elements. In particular aspects, it relates to mounts which are used positioned between a conventional shock absorber and an automobile frame. Two important parameters for designing such a mount are, I) a low axial rate of shock absorption to control noise and vibration entering the passenger compartment, and II) a high radial rate of shock absorption to provide better vehicle handling.

A known type of shock dampening mount, for connection between two relatively movable components, has an outer rigid element in the form of a housing sleeve for connection to one of the components, and an inner rigid element, extending generally axially within the housing sleeve, for connection to the other component. To provide damping, the outer and inner elements are connected through first and second annular elastomeric damping portions which are situated in axial series between them so as to be substantially surrounded by the outer sleeve. Both these elastomeric portions are subject to deformation when relative radial movement occurs between the components, so as to damp such radial movement.

In the prior art DE-A-1525131 and GB-A-1206895 (Jörn) describe resilient bushings of this type, having an outer cylindrical metal sleeve for connection to one component, an axle mounting. The other component has a bolt end passing through two inner metal sleeves surrounded by the respective annular elastomeric damping portions, which are pressed together half-way along the bushing. The outer surfaces of the elastomeric damping portions are squeezed into the outer metal sleeve. End plates are provided on the bolt, to limit the possible degree of axial deformation of the bushing.

GB-A-2140123 (Ford) describes a rather similar bushing in which the housing sleeve is provided by a generally cylindrical hole through a wheel track control arm. The bolt end, carrying the two inner metal sleeves and the end limit plates, is on a stabiliser bar. In this resilient joint the opposed ends of the two elastomeric portions are spaced from one another, both by a void and by an inwardly-directed flange of the cylindrical wall of the outer sleeve.

EP-A-63016 (Nissan) describes a bushing of the above-mentioned type for connecting a shock absorber to an adjacent vehicle body component. In this disclosure the inner metal sleeve, secured by a nut over the end of the shock absorber rod, is in one piece. End limit plates are provided on the rod. The outer cylindrical sleeve is fixed to the body component, and has an inwardly projecting flange half-way through which projects between the two annular elastomeric portions. Clearances are provided above and below the elastomeric annuli, to accommodate deformations. For relative movement in a given axial direction, only one annulus is initially deformed against its elasticity, while the other relaxes against its precompression.

In the present invention, we propose in a shock dampening mount of the type described that a periphery of one of the annular elastomeric damping portions be axially slidable relative to that one of the rigid elements which opposes that periphery, over a predetermined distance limited by a stop engagement with that element, whereby said one of the elastomeric damping portions acts to damp relative axial movements of the elements only when that predetermined sliding distance is exceeded.

In other words, a first one of the damping portions is mounted with provision for lost motion, so that when relative axial movement occurs between the rigid elements, this elastomeric portion is at least initially not constrained to deform to follow the axial movement. Only when a predetermined degree of relative axial displacement has occurred is this portion engaged axially by or from both the inner and outer elements, so that it then deforms in accordance with the axial movement.

By this means, the axial damping constant can be kept low without prejudicing the radial constant.

The lost motion is achieved by disposing the inner or outer periphery - preferably only the inner - of the first annular elastomer portion so as to be axially slidable relative to the corresponding opposing rigid element. For example, the inner periphery of an annular elastomeric insert forming the first portion can be made slidable around an axially-extending portion which moves with or is part of the inner element.

The second elastomeric portion will generally have both inner and outer peripheries fixed to move with the inner and outer elements respectively.

An abutment may be provided which engages the first elastomeric portion after a predetermined axial stroke, to provide the stop engagement as mentioned. Preferably the abutment is provided on the second elastomeric portion, or on a part that moves with it. Most preferably the second portion comprises an axially-projecting sleeve of elastomeric material against the surface of which the first elastomeric portion can slide during the lost motion. A low friction coating or lubricant may be used between the sliding surfaces.

In the most preferred version, the elastomeric portions are comprised in respective inserts which have an elastomer annulus provided in an outer sleeve which can be press-fitted into the outer sleeve element. The two portions can be press-fitted from opposite ends. Preferably also the inserts have inner rings or sleeves which move with the inner peripheries of the elastomeric annuli.

A mounting made in this way can be made and assembled simply and cheaply.

In a preferred embodiment, we provide the inserts as pressed metal/elastomeric parts. Each part has a pair of concentric cylindrical rigid sleeves, e.g. of metal, which are radially spaced about a vertical axis when the parts are vertically disposed in stacked relation. The resilient elastomeric insert is secured between each pair of metal sleeves. The inner sleeve of the vertically lowermost part extends beyond the outer sleeve thereof for slidable receipt in the bore formed by the hollow inner sleeve of the vertically uppermost part. The extension of the inner sleeve of the lower part is covered with rubber which may be coated with a substance to decrease the friction between the rubber on the extended lower inner sleeve and the inner sleeve of the upper part. The parts are designed so that the lower part will move axially upward a short distance before engaging the top part to provide the lowest possible axial rate of shock absorption. Further, the lower sleeve extension buttresses or reinforces the upper part to increase the rate of shock absorption in a radial direction.

The following description of an embodiment will be better understood by having reference to the accompanying drawings, wherein:
Fig. 1 is an assembly drawing of a shock absorbing mount which is made in accordance with the invention, the parts of the mount being shown in cross-section; and
Fig. 2 is an exploded view of the mount, also showing the parts in cross-section.

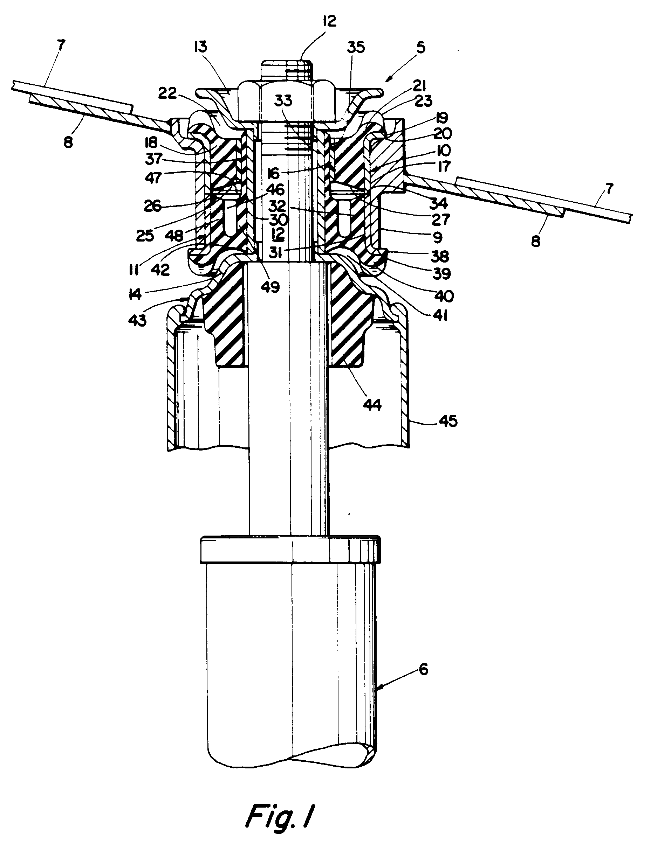

With reference to the drawing, there is shown a shock absorbing mount 5 for securing a conventional shock absorber 6 to an automobile frame 7. The mount 5, when assembled in vertical relation as represented in Fig. 1, comprises a metal mounting plate 8 which is secured to the adjacent automobile frame 7, the plate 8 having a vertically disposed, hollow cylindrical housing 9 for receiving a pair of upper and lower pressed metal/elastomeric parts or fittings 10, 11 which surround the upper shaft 12 of the shock absorber 6, and which are held there in the housing 9 by a pair of vertically spaced metal washers 13, 14 and lock nut 15.

The upper pressed fitting 10 comprises a pair of concentrically disposed rigid cylindrical sleeves 16, 17, which are radially spaced by an annular insert 18 which is composed of any suitable resilient elastomeric material, e.g. rubber. The upper end 19 of the outer sleeve 17 is curved or flared outwardly to rest on the adjacent, upper curved end 20 of the housing 9 to limit travel of upper fitting 10 in the direction of the lower fitting 11 on assembly. The upper, radially outermost end 21 of the rubber insert 18 is matingly curved to rest atop the outwardly curved end or flange 19 of the outer sleeve 17. An annular rubber collar 22, integral with the rubber insert 18, is formed atop the insert 18 and flange 21, and is provided with a corrugated outer end 23 for engaging the upper metal washer 13, depending on the transitional design parameters desired between the upper washer 13 and abutting upper pressed fitting 10. The vertically lowermost end 24 of the rubber insert 18 is provided with an inwardly directed void or cavity 25, the sidewalls 26, 27 of which are tapered and converge in the direction of the upper washer 13. The inner sleeve 16 of the upper pressed fitting 10 is shorter than the outer sleeve 17 and is composed of either metal or plastic and, in this instance, is formed of plastic to enhance slippage between the upper and lower pressed fittings 10, 11, as will become apparent from the description of the lower pressed fitting 11.

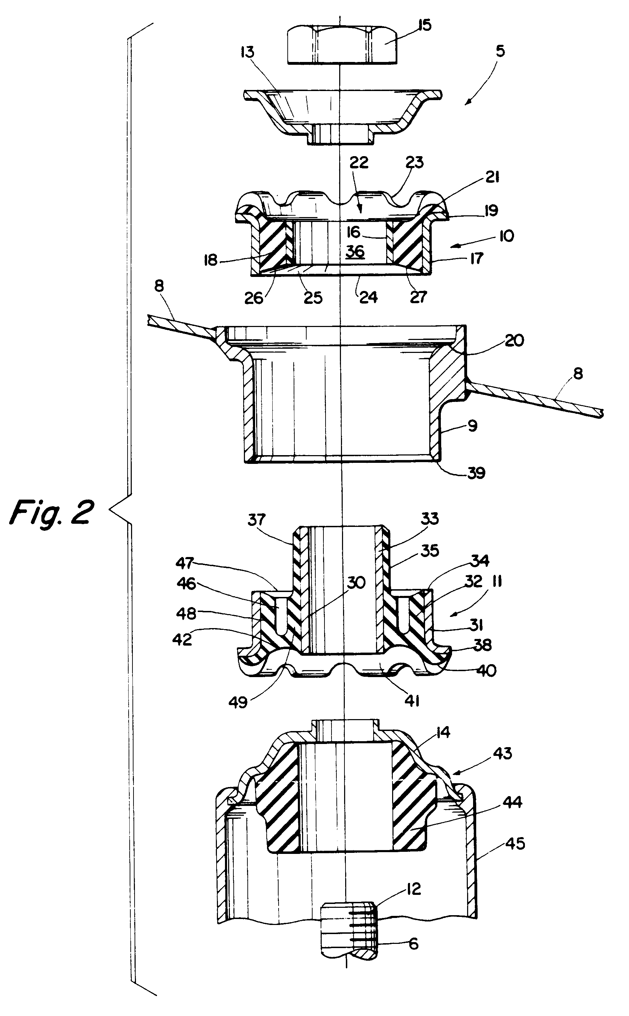

The lower pressed fitting 11 also has a pair of rigid, radially spaced, concentric inner and outer cylindrical metal sleeves 30, 31 between which is a rubber insert 32. The lower inner sleeve 30 is substantially longer than the lower outer sleeve 31 to form an inner sleeve extension 33 which extends beyond the upper rim 34 of the lower outer sleeve 31. The inner sleeve extension 33 is covered by a thin layer 35 of rubber which is integral with the rubber insert 32. The rubber coated sleeve extension 33 is designed to be slidably received in the bore 36 formed inside the hollow inner plastic sleeve 16 of the upper pressed fitting 10. To further enhance slippage between these two parts, the outer cylindrical rubber surface 37 of the sleeve extension 33 can be coated with any suitable material which further reduces the coefficient of friction between the upper plastic sleeve 16 and the lower sleeve extension 33. The lower end 38 of the lower outer sleeve 31 is flared radially outwardly to form an annular flange which engages the adjacent lower end 39 of the housing 9 to limit travel of the lower pressed fitting 11 in the direction of the upper pressed fitting 10. The lower end 40 of the lower rubber insert 32 is matingly curved to rest against the lower curved flange 38 of the lower outer sleeve 31. A corrugated rubber collar 41 is also provided at the lower end 42 of the lower rubber insert 32 to engage the adjacent lower metal washer 14 which, in this instance, is a conventional jounce bumper 43 which includes a cylindrical rubber shock absorber 44 and surrounding dust tube 45, and which is not a part of the invention. The lower rubber insert 32 is provided with an annular void or cavity 46 which extends inwardly of the insert 32 from the upper end 47 of the insert 32 closest the upper pressed fitting 10. The thickness of the sidewalls 48, 49 forming the cavity 46, are substantially the same, as best seen in Fig. 2.

The shock absorbing mount 5 is designed such that the lower pressed fitting 11 will move a slight axial distance, e.g. 3 millimeters, before it encounters or engages the upper pressed fitting 10. Thus, it can be appreciated by those skilled in the art that the initial shock vertically imposed axially upwardly against the shock absorber mount 5, will be absorbed entirely by the slideable lower pressed fitting 11 to minimize shock absorption in an axial direction in accordance with the aforementioned first important design parameter. The lower, outer sleeve extension 33 within the bore 36 of the upper pressed fitting 10, acts to bolster or reinforce the radial shock absorbing capabilities of the upper pressed fitting 10 as it coacts with the lower pressed fitting 11, to maximize the radial shock absorbing characteristics of the mount 5 in accordance with the second design parament outlined above.

Thus, there has been described a mount which has a unique sleeve extension which allows axial slippage between the pressed, shock absorbing fittings of the mount, as well as increases the radial shock absorbing characteristics of the fittings. It is believed that this unusual design and interaction of the fittings optimises the two import design characteristics desired in a mount of this type; namely, a low shock absorption in an axial direction and a high shock absorption in a radial direction.

The shock absorbing rate of the mount can be adjusted or tuned by varying the composition of the rubber insert, or by varying the size, location, or geometric shape of the cavities in the rubber insert, or by varying the size or geometric shape of the sleeves to which the rubber units are secured.

## Claims

1. A shock dampening mount (5) comprising
a rigid outer sleeve element (9,17,31) for connection to a component (7), and a rigid inner element (30) for connection to another, relatively movable component (6); and
two annular elastomeric damping portions (18,32) arrayed coaxially end-to-end, and fitting around the inner element (30) within the outer element (9,17,31) so that both the portions (18,32) act together by deformation to damp relative radial movements of the inner and outer elements;
characterised in that
a periphery of one (18) of said annular elastomeric damping portions is axially slidable relative to that one of said rigid elements opposing said periphery, over a predetermined distance limited by a stop engagement with that element, whereby said one (18) of the elastomeric damping portions acts to damp relative axial movements of the elements only when the predetermined sliding distance is exceeded.

2. A shock dampening mount according to claim 1 in which the slidable periphery of said one (18) of the elastomeric damping portions has a rigid sleeve (16) slidable against an annular axial extension (37) of the other elastomeric damping portion (32).

3. A shock dampening mount according to claim 2 in which a low friction coating or lubricant is provided between said relatively slidable rigid sleeve (16) and annular axial extension (37).

4. A shock dampening mount according to any one of claims 1 to 3 in which the slidable periphery is the inner periphery of said one (18) of the elastomeric damping portions.

5. A shock dampening mount according to any one of the preceding claims in which each of the annular elastomeric damping portions (18,32) is comprised in a respective press-fitting insert (10,11), each said press-fitting insert comprising the annular elastomeric damping portion fixed between inner and outer concentric rigid insert sleeves (16,17;30,31).

6. A shock dampening mount according to claim 5 in which the two press-fitting inserts (10,11) are retained end-to-end in a cylindrical outer housing (9).

7. A shock dampening mount according to claim 6 in which an outer end of each of the outer insert sleeves (17,31) has an outwardly-flared end portion forming a flange (19,38) to engage the end periphery of the cylindrical outer housing (9).

8. A shock dampening mount according to claim 7 comprising at each end of the mount a metal washer (13,14) fixed to the rigid inner element (30) and overlapping the press-fitting inserts (10,11) to hold them in position.

9. A shock dampening mount according to claim 8 in which each of the elastomeric damping portions (18,32) has an outer flange portion (21,41) which lies on the flange (19,38) of the respective outer insert sleeve (17,31), and the respective metal washer (13,14) radially overlaps the outer flange portion (21,41) at an axial spacing from it, to limit axial movement thereof relative to the rigid inner element (30).

10. A shock dampening mount according to claim 9 in which the outer flange portion (21,41) of the elastomeric damping portion has corrugations to engage the metal washer (13,14).

11. A shock dampening mount according to any one of claims 5 to 10 in which the inner insert sleeve (30) of a first one (11) of the press-fitting inserts (10,11) has an axial extension (33) which extends coaxially and relatively axially-slidably through the inner insert sleeve (16) of the other press-fitting insert (10).

12. A shock dampening mount according to claim 11 in which the axial extension (33) of the first inner insert sleeve (30) is covered with an elastomer layer (35) constituting an axial extension of the elastomeric damping portion (32) of that first insert (11), and the inner insert sleeve (16) of the other insert (10) slides against the elastomer layer (35).

13. A shock dampening mount according to claim 12 in which the inner insert sleeve (16) of the other insert (10) is of plastics material for sliding against the elastomer layer (37).

14. A shock dampening mount according to claim 12 or claim 13 in which the elastomer layer (35) has a low-friction coating (37).

15. A shock dampening mount according to any one of the preceding claims in which one of the elastomeric damping portions (32) has an annular cavity (46) opposing the other elastomeric damping portion (18).

16. A shock dampening mount according to claim 15 in which the other elastomeric damping portion (18) has a recessed end (25) opposing the annular cavity (46).

17. A shock dampening mount according to claim 16 in which the recessed end of the other elastomeric damping portion (18) is defined by a conical taper of the surface (26,27) thereof.

## Patentansprüche

1. Stoßdämpfendes bzw. -absorbierendes Lager (5), umfassend:
ein starres äußeres Hülsenelement (9,17,31) zur Verbindung mit einem Bauteil (7) und ein starres inneres Element (30) zur Verbindung mit einem anderen, relativ beweglichen Bauteil (6); und
zwei ringförmige Elastomerdämpfungsabschnitte (18,32), die Ende-an-Ende koaxial aneinander gereiht sind und um das innere Element (30) im äußeren Element (9,17,31) passen, sodaß die beiden Abschnitte (18,32) durch Verformung zusammenwirken, um relative radiale Bewegungen des inneren und äußeren Elements zu dämpfen;
dadurch gekennzeichnet, daß
eine Peripherie eines (18) der ringförmigen Elastomerdämpfungsabschnitte relativ zu jenem der starren Elemente, das jener Peripherie gegenüberliegt, über eine vorbestimmte Distanz, die durch einen Anschlag bzw. Stopeingriff mit jenem Element begrenzt wird, axial gleitbar ist, wodurch der eine (18) der Elastomerdämpfungsabschnitte relative axiale Bewegungen der Elemente nur dann dämpft, wenn die vorgegebene Gleitdistanz überschritten wird.

2. Stoßdämpfendes Lager nach Anspruch 1, bei dem die gleitbare Peripherie des einen (18) der Elastomerdämpfungsabschnitte eine starre Hülse (16) aufweist, die gegen einen ringförmigen axialen Fortsatz (37) des anderen Elastomerdämpfungsabschnitts (32) gleitbar ist.

3. Stoßdämpfendes Lager nach Anspruch 2, bei dem eine Beschichtung mit niedriger Reibung oder ein Schmiermittel zwischen der relativ gleitbaren starren Hülse (16) und dem ringförmigen axialen Fortsatz (37) vorgesehen ist.

4. Stoßdämpfendes Lager nach einem der Ansprüche 1 bis 3, bei dem die gleitbare Peripherie die innere Peripherie des einen (18) der Elastomerdämpfungsabschnitte ist.

5. Stoßdämpfendes Lager nach einem der vorhergehenden Ansprüche, bei dem jeder der ringförmigen Elastomerdämpfungsabschnitte (18,32) in einem jeweiligen Preß-Paßeinsatz (10,11) enthalten ist, wobei jeder Preß-Paßeinsatz den ringförmigen Elastomerdämpfungsabschnitt zwischen konzentrischen inneren und äußeren Einsatzhülsen (16,17;30,31) fixiert enthält.

6. Stoßdämpfendes Lager nach Anspruch 5, bei dem die zwei Preß-Paßeinsätze (10,11) Ende-an-Ende in einem zylindrischen Außengehäuse (9) festgehalten werden.

7. Stoßdämpfendes Lager nach Anspruch 6, bei dem ein äußeres Ende jeder der äußeren Einsatzhülsen (17,31) einen nach außen geweiteten, einen Flansch (19,38) bildenden Endabschnitt aufweist, um an der Endperipherie des zylindrischen Außengehäuses (9) anzugreifen.

8. Stoßdämpfendes Lager nach Anspruch 7, an jedem Ende des Lagers eine Metallunterlegscheibe (13,14) umfassend, die am starren inneren Element (30) fixiert ist und die Preß-Paßeinsätze (10,11) überlappt, um sie in Position zu halten.

9. Stoßdämpfendes Lager nach Anspruch 8, bei dem jeder der Elastomerdämpfungsabschnitte (18,32) einen äußeren Flanschabschnitt (21,41) aufweist, der auf dem Flansch (19,38) der jeweiligen äußeren Einsatzhülse (17,31) liegt, und die jeweilige Metallunterlegscheibe (13,14) den äußeren Flanschabschnitt (21,41) in einem axialen Abstand davon radial überlappt, um dessen axiale Bewegung relativ zum starren inneren Element (30) zu begrenzen.

10. Stoßdämpfendes Lager nach Anspruch 9, bei dem der äußere Flanschabschnitt (21,41) des Elastomerdämpfungsabschnitts Wellen aufweist, um an der Metallunterlegscheibe (13,14) anzugreifen.

11. Stoßdämpfendes Lager nach einem der Ansprüche 5 bis 10, bei dem die innere Einsatzhülse (30) eines ersten (11) der Preß-Paßeinsätze (10,11) einen axialen Fortsatz (33) aufweist, der sich koaxial und relativ axial gleitbar durch die innere Einsatzhülse (16) des anderen Preß-Paßeinsatzes (10) erstreckt.

12. Stoßdämpfendes Lager nach Anspruch 11, bei dem der axiale Fortsatz (33) der ersten inneren Einsatzhülse (30) mit einer Elastomerschicht (35) bedeckt ist, die eine axiale Fortsetzung des Elastomerdämpfungsabschnitts (32) jenes ersten Einsatzes (11) darstellt, und die innere Einsatzhülse (16) des anderen Einsatzes (10) gegen die Elastomerschicht (35) gleitet.

13. Stoßdämpfendes Lager nach Anspruch 12, bei dem die innere Einsatzhülse (16) des anderen Einsatzes (10) aus Kunststoffmaterial besteht, um gegen die Elastomerschicht (37) zu gleiten.

14. Stoßdämpfendes Lager nach Anspruch 12 oder Anspruch 13, bei dem die Elastomerschicht (35) eine Beschichtung (37) mit niedriger Reibung aufweist.

15. Stoßdämpfendes Lager nach einem der vorhergehenden Ansprüche, bei dem einer der Elastomerdämpfungsabschnitte (32) einen ringförmigen Hohlraum (46), der dem anderen Elastomerdämpfungsabschnitt (18) gegenüberliegt, aufweist.

16. Stoßdämpfendes Lager nach Anspruch 15, bei dem der andere Elastomerdämpfungsabschnitt (18) ein vertieftes Ende (27) aufweist, das dem ringförmigen Hohlraum (46) gegenüberliegt.

17. Stoßdämpfendes Lager nach Anspruch 16, bei dem das vertiefte Ende des anderen Elastomerdämpfungsabschnitts (18) durch eine konische Verjüngung seiner Oberfläche (26,27) definiert wird.

## Revendications

1. Support amortisseur de chocs (5) comprenant
un élément de manchon extérieur rigide (9, 17, 31) pour la connexion à un composant (7), et un élément rigide interne (30) pour la connexion à un autre composant (6) déplaçable relativement ; et
deux portions d'amortissement annulaires en élastomère (18, 32) disposées coaxialement bout-à-bout, et s'adaptant autour de l'élément interne (30) à l'intérieur de l'élément extérieur (9, 17, 31) de sorte que les deux portions (18,32) agissent ensemble par déformation pour amortir des mouvements radiaux relatifs des éléments intérieur et extérieur ;
caractérisé en ce qu'une périphérie d'une (18) desdites portions d'amortissement annulaires en élastomère peut coulisser axialement relativement à celui desdits éléments rigides opposés à ladite périphérie, sur une distance prédéterminée limitée par une mise en prise de butée avec cet élément, par quoi l'une (18) des portions d'amortissement en élastomère agit pour amortir des mouvements axiaux relatifs des éléments seulement lorsque la distance coulissante prédéterminée est dépassée.

2. Support amortisseur de chocs selon la revendication 1, dans lequel la périphérie coulissante d'une (18) des portions d'amortissement en élastomère possède un manchon rigide (16) pouvant coulisser contre une extension annulaire axiale (37) de l'autre portion d'amortissement en élastomère (32).

3. Support amortisseur de chocs selon la revendication 2, dans lequel un revêtement de faible friction ou un lubrifiant est prévu entre ledit manchon rigide relativement coulissant (16)et l'extension annulaire axiale (37).

4. Support amortisseur de chocs selon l'une des revendications 1 à 3, dans lequel la périphérie coulissante est constituée par la périphérie intérieure d'une (18) des portions d'amortissement en élastomère.

5. Support amortisseur de chocs selon l'une des revendications précédentes, dans lequel chacune des portions d'amortissement annulaires en élastomère (18, 32) est comprise dans un insert, respectif ajusté de manière serrée (10, 11), chacun desdits inserts ajustés de manière serrée comprenant une portion d'amortissement annulaire en élastomère fixée entre les manchons d'insert rigides concentriques intérieur et extérieur (16, 17 ; 30, 31).

6. Support amortisseur de chocs selon la revendication 5, dans lequel les deux inserts ajustés de manière serrée (10, 11) sont retenus bout-à-bout dans un boîtier cylindrique extérieur (9).

7. Support amortisseur de chocs selon la revendication 6, dans lequel une extrémité extérieure de chacun des manchons extérieurs d'insert (17, 31) possède une portion d'extrémité évasée vers l'extérieur formant un rebord (19, 38) pour la mise en prise avec la périphérie d'extrémité du boîtier cylindrique extérieur (9).

8. Support amortisseur de chocs selon la revendication 7, comprenant à chaque extrémité du support une rondelle métallique (13, 14) fixée à l'élément intérieur rigide (30) et chevauchant les inserts ajustés de manière serrée (10, 11) pour les maintenir en position .

9. Support amortisseur de chocs selon la revendication 8, dans lequel chacune des portions d'amortissement en élastomère (18,32) possède une portion de rebord extérieure (21, 41) qui se situe sur le rebord (19, 38) du manchon d'insert extérieur respectif (17, 31), et la rondelle métallique respective (13, 14) recouvre radialement la portion de rebord extérieure (21, 41) à un espacement axial de celle-ci pour limiter le déplacement axial de celle-ci relativement à l'élément intérieur rigide (30).

10. Support amortisseur de chocs selon la revendication 9, dans lequel la portion de rebord extérieure (21, 41) de la portion d'amortissement en élastomère présente des ondulations pour la mise en prise avec la rondelle métallique (13, 14).

11. Support amortisseur de chocs selon l'une des revendications 5 à 10, dans lequel le manchon d'insert intérieur (30) d'un premier (11) des inserts ajustés de manière serrée (10, 11) possède une extension axiale (33) qui s'étend coaxialement et qui peut coulisser axialement relativement à travers le manchon d'insert intérieur (16) de l'autre insert ajusté de manière serrée (10).

12. Support amortisseur de chocs selon la revendication 11, dans lequel l'extension axiale (33) du premier manchon d'insert intérieur (30) est recouverte d'une couche en élastomère (35) constituant une extension axiale de la portion d'amortissement en élastomère (32) de ce premier insert (11), et le manchon d'insert intérieur (16) de l'autre insert (10) glisse contre la couche en élastomère (35).

13. Support amortisseur de chocs selon la revendication 12, dans lequel le manchon d'insert intérieur (16) de l'autre insert (10) est en matière plastique pour glisser contre la couche élastomère (37).

14. Support amortisseur de chocs selon la revendication 12 ou la revendication 13, dans lequel la couche élastomère (35) a un revêtement de faible friction (37).

15. Support amortisseur de chocs selon l'une des revendications précédentes, dans lequel l'une des portions d'amortissement en élastomère (32) présente une cavité annulaire (46) opposée à l'autre portion d'amortissement en élastomère (18).

16. Support amortisseur de chocs selon la revendication 15, dans lequel l'autre portion d'amortissement en élastomère (18) possède une extrémité évidée (25) opposée à la cavité annulaire (46).

17. Support amortisseur de chocs selon la revendication (16), dans lequel l'extrémité évidée de l'autre portion d'amortissement en élastomère (18) est définie par une diminution conique de la surface (26, 27) de celle-ci.
